# EUROPÄISCHE PATENTANMELDUNG

(11) **EP 1 821 501 A1**
(43) Veröffentlichungstag der Anmeldung: **22.08.2007**
(21) Anmeldenummer: 07002047.4
(22) Anmeldetag: 31.01.2007
(51) Int. Cl.: H04M 1/04, B60R 11/02

(54) **Haltevorrichtung für ein elektronisches Gerät**

(30) Priorität: 17.02.2006 DE 102006007837; 08.03.2006 DE 102006011044; 27.06.2006 DE 102006029782
(71) Anmelder: Peiker, Andreas, 61381 Friedrichsdorf/Ts (DE)
(72) Erfinder: Peiker, Andreas, 61381 Friedrichsdorf/Ts (DE)
(74) Vertreter: Eisele, Otten, Roth & Dobler

(57) **Zusammenfassung**

Die Erfindung betrifft eine Haltevorrichtung (1) für ein elektronisches Gerät (2), wobei die Haltevorrichtung (1) einen feststehenden Grundkörper und einen Träger (4) umfasst, wobei der Träger (4) an dem Grundkörper um eine Schwenkachse (5) schwenkbar angeordnet ist, wobei der Träger (4) relativ zu dem Grundkörper aus einer Haltestellung (B) für das elektronische Gerät (2) in eine Einschiebestellung bzw. Entnahmestellung für das elektronische Geräte (2) schwenkbar ist, wobei der Träger (4) wenigstens eine Schnittstelle (7) aufweist, welche zu einer Schnittstelle (8) des elektronischen Geräts (2) kompatibel ist, wobei der Träger (4) in Draufsicht einen etwa rechteckigen Aufnahmeraum (9) aufweist, welcher Längsseiten (L91,L92) und Querseiten (Q91,Q92) aufweist.

## Beschreibung

Die Erfindung betrifft eine Haltevorrichtung für ein elektronisches Gerät gemäß dem Oberbegriff des Anspruchs 1.

Aus der DE 196 52 826 A1 ist eine Haltevorrichtung für ein elektronisches Gerät bekannt, wobei die Haltevorrichtung einen feststehenden Grundkörper und einen Träger umfasst, wobei der Träger an dem Grundkörper um eine Schwenkachse schwenkbar angeordnet ist, wobei der Träger relativ zu dem Grundkörper aus einer Haltestellung für das elektronische Gerät in eine Einschiebestellung bzw. Entnahmestellung für das elektronische Gerät schwenkbar ist, wobei der Träger wenigstens eine Schnittstelle aufweist, welche zu einer Schnittstelle des elektronischen Geräts kompatible ist, wobei der Träger in Draufsicht einen etwa rechteckigen Aufnahmeraum aufweist, welcher Längsseiten und Querseiten aufweist. Nachteilig an einer derartigen Haltevorrichtung ist, dass diese beispielsweise nicht für neuartige Klapptelefone verwendbar ist, da deren Schnittstelle nicht an einem quer zur Längsrichtung des Telefons.stehenden Ende, sondern an einer parallel zur Längsrichtung des Telefons verlaufenden Längsseite angeordnet ist.

Der Erfindung liegt die Aufgabe zugrunde, eine Haltevorrichtung für ein elektronisches Gerät zu entwickeln, welche eine platzsparende und sichere Halterung von elektronischen Geräten ermöglicht, welche eine Schnittstelle aufweisen, die an einer parallel zu einer Längsrichtung des elektronischen Geräts verlaufenden Längsseite angeordnet ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Haltevorrichtung weist eine Schwenkachse auf, die etwa parallel zu den Längsseiten des Aufnahmeraums ausgerichtet ist, wobei die Schnittstelle des Trägers an einer der Längsseiten seines Aufnahmeraums angeordnet ist und wobei der Aufnahmeraum von der Längsseite her zugänglich ist, welche der Schnittstelle gegenüberliegt. Eine derartige Haltevorrichtung erlaubt es, ein elektronisches Gerät welches eine Schnittstelle aufweist, die an einer parallel zu dessen Längsrichtung verlaufenden Längsseite angeordnet ist, sicher zu halten und hierbei zu kontaktieren.

Die Erfindung sieht weiterhin vor, das elektronische Gerät im. Bereich seiner Längsseite durch den Träger wenigstens bereichsweise formschlüssig aufzunehmen. Hierdurch wird eine Haltevorrichtung geschaffen, welche die Haltekräfte auf viele Bereich des elektronischen Gerätes verteilt und dieses somit schonend und wirksam hält.

Weiterhin sieht die Erfindung vor, mit einer die Schnittstelle tragenden Längswand des Trägers wenigstens eine Anlagefläche für das elektronische Gerät auszubilden. Hierdurch kann ein zu starker Druck beim Aufschieben des elektronischen Geräts auf die Schnittstelle mit einfachen Mitteln wirksam abgefangen werden. Somit ist eine Überlastung der Schnittstelle der Haltevorrichtung nahezu ausgeschlossen.

Erfindungsgemäß ist es weiter vorgesehen, durch eine Bodenfläche des Trägers wenigstens eine Auflagefläche für das elektronische Gerät zu bilden. Hierdurch erfährt das elektronische Gerät eine wirksame Unterstützung, wenn auf der Oberseite des elektronischen Geräts angeordnete Tasten bedient werden, während das elektronische Geräte in der Haltevorrichtung gehalten ist.

Erfindungsgemäß ist es auch vorgesehen, an der Haltevorrichtung wenigstens ein Rastelement anzuordnen, welches das elektronische Gerät in der Haltestellung des Trägers an der Haltevorrichtung fixiert. Hierdurch kann ein ungewünschtes Lösen des elektronischen Geräts aus der Haltevorrichtung wirksam verhindert werden.

Besonders vorteilhaft ist es im Sinne der Erfindung, wenn der Träger drei Seitenwände aufweist. Durch diese kann das elektronische Gerät optimal abgestützt und geschützt werden.

Durch die Ausbildung des Träger als taschenartiges Fach, in welches das elektronische Gerät einsteckbar ist, kann erfindungsgemäß eine das elektronische Gerät in besonderem Maße schützende Haltevorrichtung geschaffen werden.

Weiterhin sieht die Erfindung bei einem als Tasche ausgebildeten Träger vor, diese im Bereich eines Displays des elektronischen Geräts mit einer Öffnung oder einem Fenster zu versehen.

Erfindungsgemäß ist es auch vorgesehen, den Träger aus einem transparenten Material auszubilden, um dem Nutzer zu ermöglichen, Anzeigelemente des elektronischen Geräts auch ablesen bzw. erkennen zu können, wenn dieses in der Haltevorrichtung gehalten ist.

Erfindungsgemäß ist es vorgesehen, das Mobiltelefon in der Einschiebestellung bzw. Entnahmestellung des Trägers aus der Haltevorrichtung entgegen einer Kontaktierungsrichtung zu entnehmen. Hierdurch ist eine Beschädigung der Schnittstellen sicher vermieden.

Weiterhin sieht die Erfindung vor, das elektronische Gerät als Mobiltelefon und insbesondere als Klapptelefon auszubilden, welches aus zwei Hälften besteht, die um eine quer zu einer Längsachse des Mobiltelefons liegende Klappachse um wenigstens 90° auseinander faltbar sind, oder als Schiebetelefon auszubilden, welches aus zwei Hälften besteht, die in einer parallel zu einer Oberseite oder einer Unterseite liegenden Trennebene in Längsrichtung des Mobiltelefons zueinander verschiebbar sind.

Erfindungsgemäß ist es vorgesehen, die Haltervorrichtung in eine Konsole einzubetten. Hierdurch ist es möglich eine Haltevorrichtung zu verwirklichen, welche sich in eine bestehende Umgebung einpasst und nicht die Bewegungsfreiheit einengt oder eine Verletzungsgefahr mit sich bringt.

Die Erfindung sieht auch vor, die Haltevorrichtung über eine Kontaktplatte in einem Innenraum eines Fahrzeugs zu kontaktieren und ortsfest anzubringen. Hierdurch ist eine direkte Übertragung von analogen und/oder digitalen Signalen an weitere im Fahrzeug angeordnete Komponenten möglich. Weiterhin ist ein rascher Austausch der Haltevorrichtung möglich, da diese nicht umständlich ausgebaut werden muss.

Schließlich sieht die Erfindung vor, auf dem Grundkörper der Haltevorrichtung wenigsten einen elektrischen Schalter oder einen elektrischen Taster anzuordnen. Hierdurch können über die Haltevorrichtung vorprogrammierte Sonderfunktionen direkt ausgelöst werden.

Weitere Einzelheiten der Erfindung werden in der Zeichnung anhand von schematisch und teilweise vereinfacht dargestellten Ausführungsbeispielen beschrieben.

Hierbei zeigt:
- Figuren 1 - 3:: zeigen eine schematisch dargestellte Haltevorrichtung in unterschiedlichen Stellungen zusammen mit einem elektronischen Gerät jeweils in Seitenansicht,
- Figur 4:: zeigt eine Draufsicht auf die Figur 3,
- Figuren 5, 6:: zeigen in Analogie zu den Figuren 2 und 3 Darstellungen einer alternativen Ausführungsform,
- Figur 7:: eine perspektivische Ansicht einer weiteren Haltevorrichtung in der Halterstellung ohne Darstellung eines elektronischen Geräts,
- Figur 8:: eine Seitenansicht der in der Figur 7 gezeigten Haltevorrichtung in der Einschiebestellung bzw. Entnahmestellung,
- Figur 9, 10:: perspektivische Ansichten der in der Figur 8 dargestellten Haltevorrichtung aus unterschiedlichen Blickwinkeln,
- Figur 11 - 15:: eine vierte Ausführungsform einer Haltevorrichtung in unterschiedlichen Darstellungen,
- Figur 16:: eine fünfte Ausführungsform einer Haltervorrichtung in perspektivischer Darstellung,
- Figur 17a:: eine Seitenansicht auf eine sechste Ausführungsform einer Haltevorrichtung mit einer Kontaktplatte für die Haltevorrichtung und
- Figur 17b:: eine perspektivische Ansicht der in der Figur 17a gezeigten Haltevorrichtung.

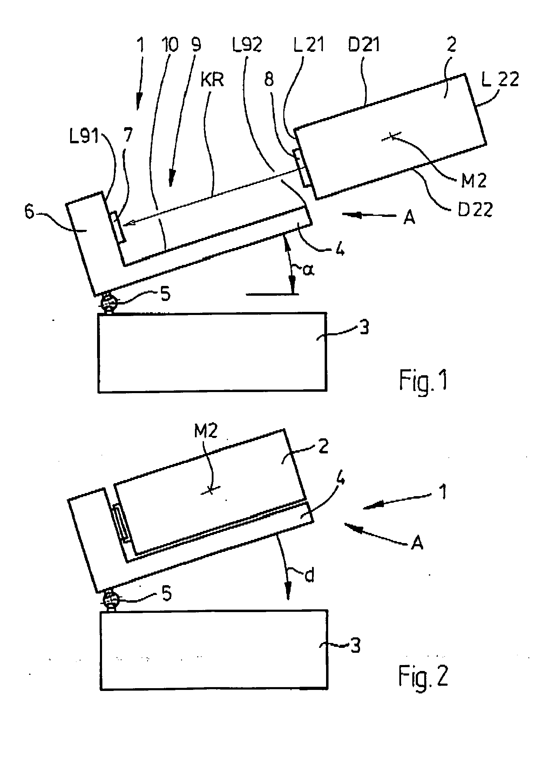

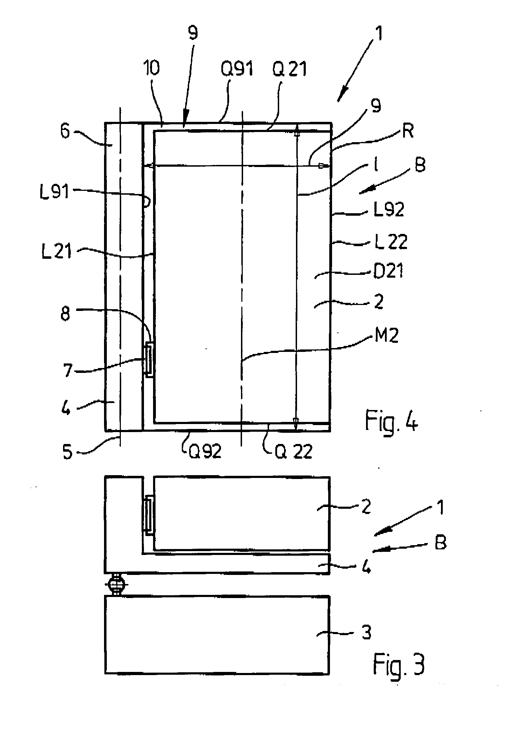

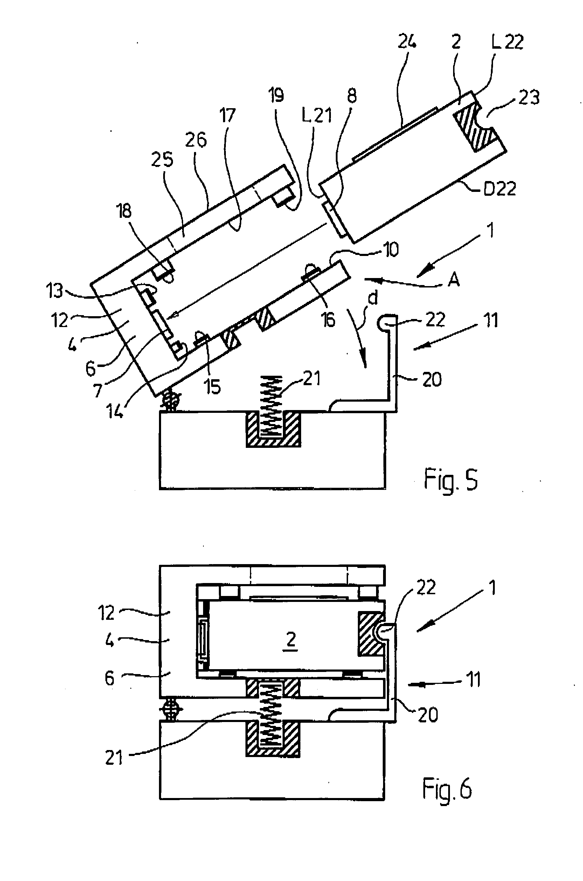

In den Figuren 1 bis 3 ist eine schematisch dargestellte Haltevorrichtung 1 zusammen mit einem elektronischen Gerät 2 in unterschiedlichen Stellungen gezeigt. Die Haltevorrichtung 1 umfasst einen Grundkörper 3 und einen Träger 4, wobei der Träger 4 relativ zu dem Grundkörper 3 um eine Schwenkachse 5 schwenkbar ist. Die Schwenkachse 5 ermöglicht es dem Träger 4 eine in den Figuren 1 und 2 gezeigte Einschiebestellung bzw. Entnahmestellung A einzunehmen und eine in der Figur 3 dargestellte Haltestellung B einzunehmen. Ein zwischen der Einschiebe- bzw. Entnahmestellung A und der Haltestellung B liegender Schwenkwinkel α liegt in einem Bereich von etwa 15° bis 90° und insbesondere bei α = 35°. Der Träger 4 weist eine Längswand 6 auf, an welcher eine Schnittstelle 7 für eine Kontaktierung des elektronischen Geräts 2 angeordnet ist. Entsprechend ist das elektronische Gerät 2 mit einer zu der Schnittstelle 7 kompatiblen Schnittstelle 8 ausgestattet. Zur Kontaktierung und Fixierung wird das elektronische Gerät 2 in eine Kontaktierungsrichtung KR auf den Träger 4 aufgeschoben. In der Figur 2 ist der Träger 4 mit dem vollständig aufgeschobenen elektronischen Gerät 2 dargestellt, wobei der Träger 4 hier noch in der Einschiebe- bzw. Entnahmestellung A steht. Durch ein Schwenken in eine Schwenkrichtung d wird der Träger 4 zusammen mit dem elektronischen Gerät.2 dann in die in der Figur 3 gezeigte Haltestellung B gebracht. Der Träger 4 bildet einen Aufnahmeraum 9 für das elektronische Gerät 2 (siehe Figur 1), wobei der Aufnahmeraum 9 zwei Längsseiten L91 und L92 und zwei Querseiten Q91 und Q92 aufweist (siehe Figur 1 und 4). An der Längsseite L91 des Aufnahmeraums 9 befindet sich die Längswand 6 zusammen mit der Schnittstelle 7 der Haltevorrichtung 1. Zu der Längsseite L92 und den Querseiten Q91 und Q92 ist der Aufnahmeraum 9 der in den Figuren 1 bis 4 dargestellten ersten Ausführungsvariante offen. Die Schwenkachse 5 verläuft parallel zu den Längsseiten L91 bzw. L92 des Aufnahmeraums 9. Die Längsseiten L91 bzw. L92 weisen eine Länge 1 auf. Die Querseiten Q91 bzw. Q92 weisen eine Länge q. Für die Längen 1 und q gilt 1 > q und insbesondere 1 ≅ 2 x q. Somit weist der Aufnahmeraum 9 des Trägers 4 in der Draufsicht die Form eines Rechtecks R auf. Das elektronische Gerät 2 besitzt eine Längsmittelachse M2, welche parallel zu der Schwenkachse 5 liegt, wenn das elektronisch Gerät 2 in die Haltevorrichtung 1 eingeschoben wird bzw. eingeschoben ist. Die Schnittstelle 8 des elektronischen Geräts 2 ist an einer Längsseitenfläche L21 des elektronischen Geräts 2 angeordnet, wobei die Längsseitenfläche L21 parallel zu der Längsmittelachse M2 und einer weiteren, gegenüberliegenden Längsseitenfläche L22 liegt. Querseitenflächen Q21 und Q22 des elektronischen Geräts 2 sind parallel zu den Querseiten Q91 und Q92 des Aufnahmeraums 9 der Haltevorrichtung 1 angeordnet. Eine Oberseite D21 und einer Unterseite D22 des elektronischen Geräts 2 sind parallel zu einer Bodenfläche 10 des Trägers 4 ausgerichtet, wenn das elektronische Gerät 2 in der Haltevorrichtung 1 kontaktiert und fixiert ist.

In den Figuren 5 und 6 ist in Analogie zu den Figuren 2 und 3 eine Ausführungsvariante einer Haltevorrichtung 1 dargestellt, welche sich von der in den Figuren 1 bis 4 dargestellten Ausführungsvariante im wesentlichen durch ein Rastelement 11 und einen als Fach 12 ausgeführten Träger 4 unterscheidet. Weiterhin bildet eine Längswand 6 des Trägers 4 Anlageflächen 13 und 14 für eine Längsseitenfläche L21 eines elektronischen Geräts 2. Durch eine Bodenfläche 10 des Trägers 4 sind im Unterschied zu der Ausführungsform der Figuren 1 bis 4 Auflageflächen 15 und 16 für eine Unterseite D22 des elektronischen Geräts 2 gebildet. An einer Deckenfläche 17 des als Fach 12 ausgebildeten Trägers 4 sind weitere Kontaktflächen 18 und 19 ausgebildet, um das elektronische Gerät 2 versatzfrei mit seiner Schnittstelle 8 auf eine Schnittstelle 7 des Trägers 4 zu führen. Das Rastelement 11 wird im wesentlichen durch einen an einem Grundkörper 3 der Haltevorrichtung 1 befestigten Federarm 20 und eine an dem Grundkörper 3 und dem Träger 4 geführte Spiralfeder 21 gebildet. Aus einer in der Figur 5 dargestellten Stellung A des Trägers 4 wird dieser in eine Schwenkrichtung d gegen die Kraft der Spiralfeder 21 zu dem Grundkörper 3 hin geschwenkt, wobei in der in der Figur 6 dargestellten Stellung B eine Nase 22 des Federarms 20 in einen Rücksprung 23 schnappt, welcher an einer Längsseitenfläche L22 des elektronischen Geräts 2 vorhanden ist. Durch den Federarm 20 wird die Haltevorrichtung 1 dann in der Stellung B gehalten, bis der Federarm 20 manuell aus dem Rücksprung 23 gezogen wird und die Spiralfeder 21 den Träger 4 in die in der Figur 5 gezeigte Stellung A zurückdrückt. Damit eine Anzeigevorrichtung 24 des elektronischen Geräts 2 auch ablesbar ist, wenn das elektronische Gerät 2 in den als Fach 12 ausgebildeten Träger 4 eingeschoben ist, weist dieser oberhalb der Anzeigevorrichtung 24 einen offenen Durchbruch 25 und/oder ein Fenster 26 auf. Gemäß einer nicht dargestellten Ausführungsvariante ist es vorgesehen, dass Tasten des elektronischen Geräts durch den Durchbruch hindurch bedienbar sind.

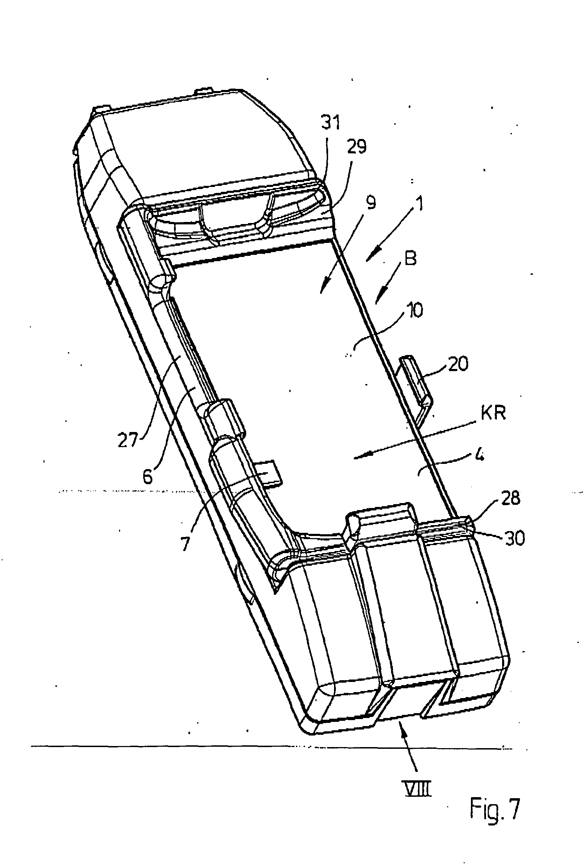

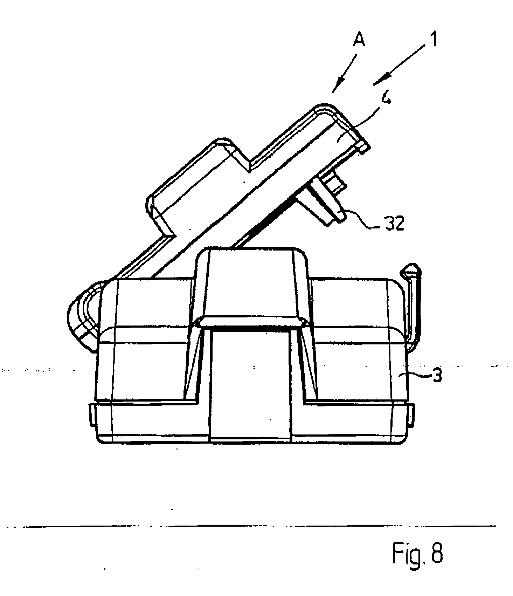

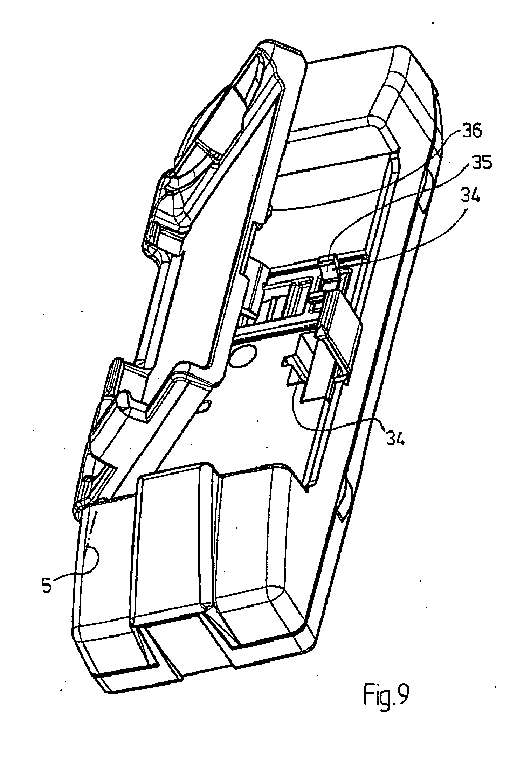

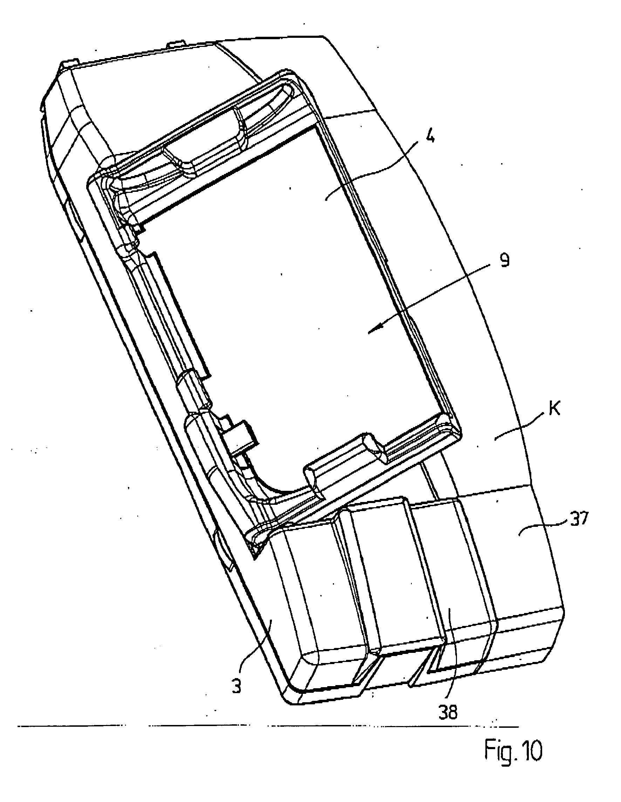

In der Figur 7 ist eine dritte Ausführungsform einer Haltevorrichtung 1 dargestellt, wobei sich diese in einer Haltestellung B befindet, wie sie aus den Figuren 3, 4 und 6 bekannt ist. Da in der Figur 7 kein elektronisches Gerät in die Haltevorrichtung 1 eingelegt ist, ist der Blick auf einen durch einen Träger 4 ausgebildeten Aufnahmeraum 9 frei. Der Aufnahmeraum 9 wird durch Seitenwände 27, 28 und 29 begrenzt, wobei die Seitenwand 27 durch eine Längswand 6, und die Seitenwände 28, 29 durch Querwände 30, 31 gebildet sind. Eine Bodenfläche 10 des Trägers 4 wird von einem Federarm 20 überragt, welcher dafür vorgesehen ist, ein nicht dargestelltes elektronische Gerät zu übergreifen. Analog zu den in den Figuren 1 bis 6 dargestellten beiden Ausführungsformen ist an der Längswand 6 des Trägers 4 eine Schnittstelle 7 angeordnet, auf welche das nicht dargestellte elektronische Gerät aus einer Kontaktierungsrichtung KR mit seiner Schnittstelle aufgeschoben werden kann, wenn die Haltevorrichtung in einer Einschiebe- bzw. Entnahmestellung A steht wie diese in der Figur 8 gezeigt ist. Die Figur 8 zeigt eine Ansicht auf die in der Figur 7 dargestellte Haltevorrichtung aus einer Pfeilrichtung VIII. In der Figur 8 ist an dem Träger 4 ein zu einem Grundkörper 3 der Haltevorrichtung 1 gerichteter Steg 32 erkennbar, welcher dafür vorgesehen ist in einen in der perspektivischen Darstellung der Figur 9 sichtbaren Schacht 34 einzutauchen und hierdurch den Träger 4 zu führen, wenn dieser um eine angedeutete Drehachse 5 auf den Grundkörper 3 geschwenkt wird. In der Figur 9 ist weiterhin eine Rastvorrichtung 34 erkennbar, welche nach dem sogenannten Push-Push-Prinzip arbeitet, d.h., dass eine Klammer 35 beim eindrücken einer Nase 36 abwechselnd geöffnet und wieder geschlossen wird. Die Figur 10 zeigt schließlich eine weitere perspektivische Ansicht der in den Figuren 7 bis 9 dargestellten dritten Ausführungsform. In dieser Darstellung ist erkennbar, wie es durch die Schwenkbarkeit des Trägers 4 ermöglicht wird, ein nicht dargestelltes elektronisches Gerät in den Aufnahmeraum 9 einzuschieben, auch wenn der Grundkörper 3 in eine Konsole K eingebettet ist, deren Oberfläche 37 auf einem Niveau einer Oberfläche 38 des Grundkörpers 3 liegt und somit eine Entnahme des nicht dargestellten Mobiltelefons verhindert, wenn der Träger 4 in der in der Figur 7 gezeigten Haltestellung B steht. Diese Betrachtung gilt selbstverständlich auch für den Federarm 20, welcher die Entnahme des nicht dargestellten elektronischen Geräts in der Stellung B ebenfalls verhindert.

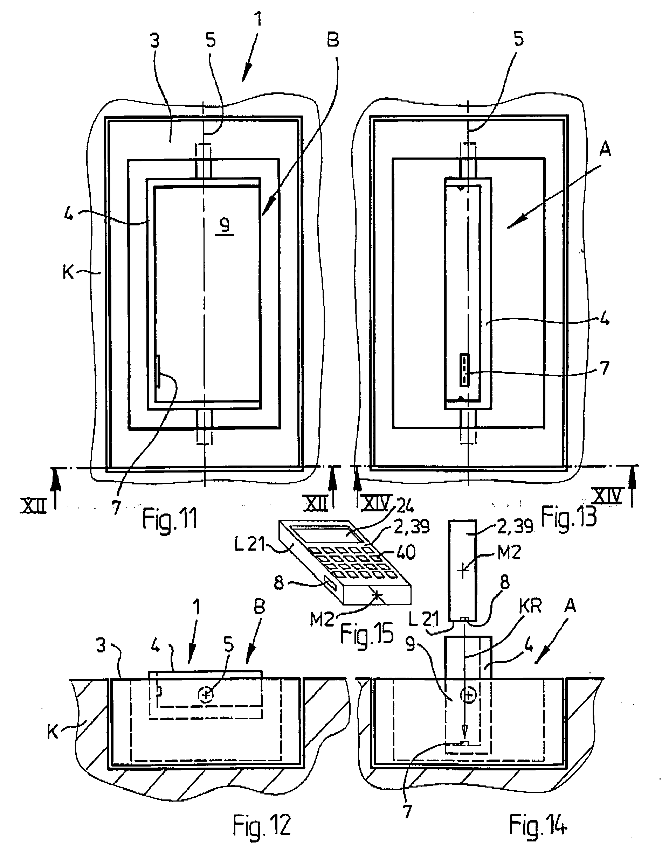

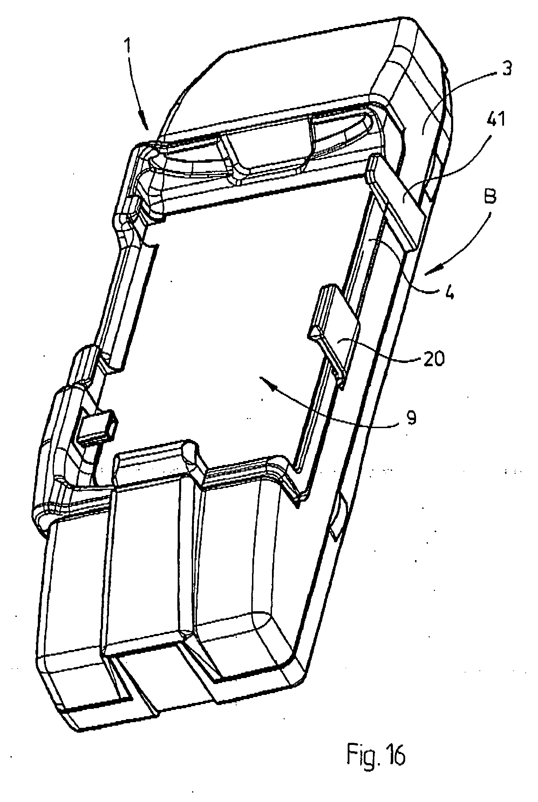

In den Figuren 11 bis 15 ist eine vierte Aufführungsform der Haltevorrichtung 1 schematische dargestellt. Die Figur 11 zeigt eine Draufsicht auf die Haltervorrichtung 1 mit einem Grundkörper 3 und einem um eine Drehachse 5 schwenk- bzw. drehbaren Träger 4. Der Träger 4 steht in einer Haltestellung B, wobei kein elektronisches Gerät in einem Aufnahmeraum 9 des Trägers 4 ruht. Die Haltevorrichtung 1 ist in eine Konsole 9, beispielsweise eine Mittelkonsole eines Fahrzeugs eingebettet. Dies geht insbesondere aus der Figur 12 hervor, welche einen Schnitt entlang einer in der Figur 11 gezeigten Schnittlinie XII zeigt. In den Figuren 13 und 14 ist die Haltervorrichtung 1 in einer Einschiebestellung bzw. Entnahmestellung A dargestellt, wobei die Figur 13 eine Draufsicht auf die Haltervorrichtung 1 zeigt und die Figur 14 analog zu der Figur 12 wiederum eine Schnittdarstellung zeigt, welche entsprechend einer Schnittlinie XIV ausgeführt ist. In der Stellung A der Haltevorrichtung 1 bzw. des Trägers 4 ist der Träger 4 gegenüber der Stellung B um 90° um die Drehachse 5 geschenkt und ein als Mobiletelefon 39 ausgeführtes elektronisches Gerät 2 kann senkrecht von oben in einer Kontaktierungsrichtung KR in den Aufnahmeraum des Träges 4 eingeschoben werden. Hierbei trifft eine Schnittstelle 8 des Mobiltelefons 39 auf eine an dem Träger 4 angeordnete Schnittstelle 7. Die Schnittstelle 8 des Mobiltelefons 39 befindet sich an einer Längsseitenfläche L21 des Mobiltelefons, die parallel zur einer Längsmittelachse M2 des Mobiltelefons 39 liegt. Um die Lage der Schnittstelle 8 an dem elektronischen Geräte 2 bzw. Mobiltelefon 39 zu verdeutlichen, zeigt die Figur 15 das Mobiltelefon 39 in perspektivischer Darstellung mit weiteren Details wie Anzeigevorrichtung 24 und Tasten 40. In der vierten Ausführungsvariante der Figuren 11 bis 15 wird nochmals deutlich, die Haltevorrichtung 1 geeignet ist, Mobiltelefons mit spezieller Anordnung der Schnittstelle an einer Längsseitenfläche aufzunehmen und hierbei die Halterung in eine Konsole zu integrieren.

In der Figur 16 ist eine fünfte Ausführungsform einer Haltevorrichtung 1 dargestellt, wobei diese in ihrem Aufbau weitgehend der in den Figuren 7 bis 10 gezeigten Haltevorrichtung entspricht. Die Haltervorrichtung 1 ist in der Figur 16 in einer Haltestellung B dargestellt, wie diese aus der Figur 7 bekannt ist. Da in der in der Figur 16 dargestellten Haltevorrichtung 1 kein elektronisches Gerät in einem Aufnahmeraum 9 liegt, ist der Blick auf einen den Aufnahmeraum 9 bildenden Träger 4 frei. Der Aufnahmeraum 9 ist im Vergleich zu der in den Figuren 7 bis 10 gezeigten Ausführungsvariante seitlich durch eine zusätzliche Klammer 41 begrenzt. Diese Klammer 41 sichert als Anschlag den schwenkbaren Träger und ggf. das in den Aufnahmeraum 9 eingelegte elektronische Gerät gegen im Fahrzeug auftretende Seitenkräfte. Insbesondere dient die Klammer 41 zur Entlastung eines Federarms 20. Die Klammer 41 ist mit einem Grundkörper 3 der Haltervorrichtung 1 einteilig ausgeführt oder fest verbunden. Die Erfindung sieht auch vor, mehrere Klammern nebeneinander anzuordnen.

In der Figur 17a ist eine sechste Ausführungsform einer Haltevorrichtung 1 dargestellt, wobei diese in ihrem Aufbau weitgehend der in den Figuren 7 bis 10 gezeigten Haltevorrichtung entspricht. Die Haltervorrichtung 1 ist in der Figur 17a in einer Seitenansicht dargestellt. An einer Unterseite 42 weist die Haltevorrichtung 1 einen Rücksprung 43 mit einer Schnittstelle 44 auf. Mit der Unterseite 42 ist die Haltevorrichtung 1 auf eine Schnittstelle 45 einer Kontaktplatte 46 aufsetzbar. Die Haltevorrichtung 1 ist mit der Kontaktplatte 46 auch verrastbar und über die zusammenwirkenden Schnittstellen 44 und 45 sind analoge und/oder digitale Signale übertragbar.

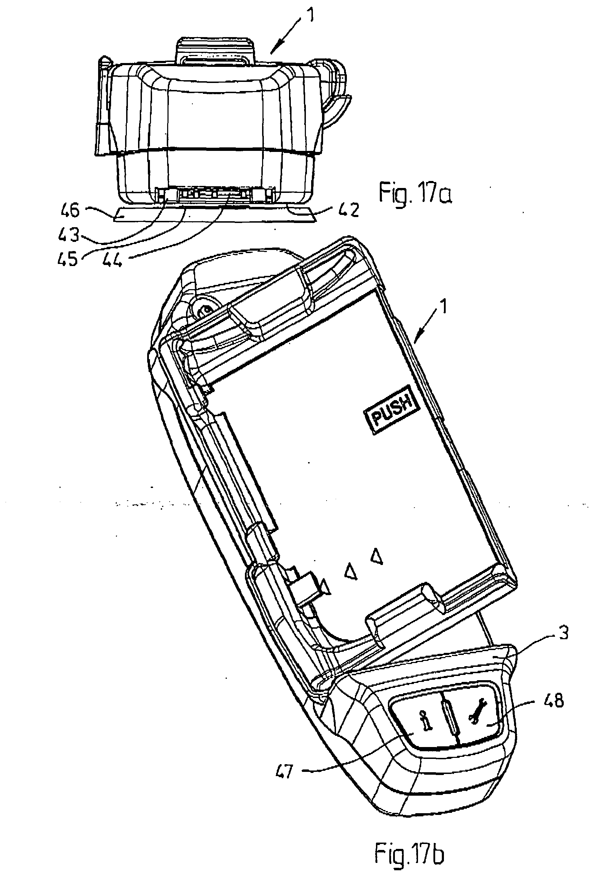

In der Figur 17b ist die in der Figur 17a gezeigte Haltevorrichtung 1 in einer perspektivischen Ansicht gezeigt. An einem Grundkörper 3 der Haltevorrichtung 1 sind zwei elektrische Taster 47 und 48 angeordnet, über welche vordefinierte Sonderfunktionen des nicht dargestellten elektronischen Geräts abrufbar sind.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Haltevorrichtung
- 2: elektronisches Gerät
- 3: Grundkörper von 1
- 4: Träger von 1
- 5: Schwenkachse zwischen 3 und 4
- 6: Längswand von 4
- 7: Schnittstelle an 4
- 8: Schnittstelle an 2
- 9: Aufnahmeraum von 4
- 10: Bodenfläche von 4
- 11: Rastelement
- 12: Fach
- 13: Anlagefläche gebildet durch 6
- 14: Anlagefläche gebildet durch 6
- 15: Auflagefläche gebildet durch 10
- 16: Auflagefläche gebildet durch 10
- 17: Deckfläche von 12
- 18: Kontaktfläche gebildet durch 17
- 19: Kontaktfläche gebildet durch 17
- 20: Federarm
- 21: Spiralfeder
- 22: Nase von 20
- 23: Rücksprung
- 24: Anzeigevorrichtung von 2
- 25: Durchbruch in 12
- 26: Fenster in 12
- 27: Seitenwand von 4
- 28: Seitenwand von 4
- 29: Seitenwand von 4
- 30: Querwand von 4
- 31: Querwand von 4
- 32: Steg an 4
- 33: Schacht in 3
- 34: Rastvorrichtung
- 35: Klammer
- 36: Nase
- 37: Oberfläche von K
- 38: Oberfläche von 3
- 39: Mobiltelefon
- 40: Taste von 39
- 41: Klammer
- 42: Unterseite von 1
- 43: Rücksprung an 42
- 44, 45: Schnittstelle an 42 bzw. 46
- 46: Kontaktplatte
- 47, 48: elektrischer Taster

- α: Schwenkwinkel
- L91: Längsseite von 9
- L92: Längsseite von 9
- Q91: Querseite von 9
- Q92: Querseite von 9
- KR: Kontaktierungsrichtung
- d .: Schwenkrichtung
- 1: Länge von L91 bzw. L92
- q: Länge von Q91 bzw. Q92
- R: Rechteck
- K: Konsole
- M2: Längsmittelachse von 2
- D21: Oberseite von 2
- D22: Unterseite von 2
- L21: Längsseitenfläche von 2
- L22: Längsseitenfläche von 2
- Q21: Querseitenfläche von 2
- Q22: Querseitenfläche von 2
- A: Einschiebestellung bzw. Entnahmestellung von 4 bzw. 1

- B: Haltestellung von 4 bzw. 1

## Patentansprüche

1. Haltevorrichtung (1) für ein elektronisches Gerät (2, 39),
- wobei die Haltevorrichtung (1) einen feststehenden Grundkörper (3) und einen Träger (4) umfasst,
- wobei der Träger (4) an dem Grundkörper (3) um eine Schwenkachse (5) schwenkbar angeordnet ist,
- wobei der Träger (4) relativ zu dem Grundkörper (3) aus einer Haltestellung (B) für das elektronische Gerät (2, 39) in eine Einschiebestellung bzw. Entnahmestellung (A) für das elektronische Geräte (2, 39) schwenkbar ist,
- wobei der Träger (4) wenigstens eine Schnittstelle (7) aufweist, welche zu einer Schnittstelle (8) des elektronischen Geräts (2, 39) kompatible ist,
- wobei der Träger (4) in Draufsicht einen etwa rechteckigen Aufnahmeraum (9) aufweist, welcher Längsseiten (L91, L92) und Querseiten (Q91, Q92) aufweist,
**dadurch gekennzeichnet, dass**
- die Schwenkachse (5), um welche der Träger (4) relativ zu dem feststehenden Grundkörper (3) schwenkbar ist, etwa parallel zu den Längsseiten (L91, L92) des Aufnahmeraums (9) ausgerichtet ist,
- wobei die Schnittstelle (7) des Trägers (4) an einer der Längsseiten (L91, L92) seines Aufnahmeraums (9) angeordnet ist und
- wobei der Aufnahmeraum (9) für das elektronische Gerät (2, 39) von der Längsseite (L92) her zugänglich ist, welche der Schnittstelle (7) gegenüberliegt.

2. Haltevorrichtung nach Anspruch 1, **dadurch gekennzeichnet, dass** der Träger (4) das elektronische Gerät (2, 39) im Bereich seiner Längsseite (191, L92) wenigstens bereichsweise formschlüssig aufnimmt.

3. Haltevorrichtung nach einem der vorhergehenden Ansprüche, **dadurch gekennzeichnet, dass** der Träger (4) mit einer die Schnittstelle (7) tragenden Längswand (6) wenigstens eine Anlagefläche (13, 14) für das elektronische Gerät (2, 39) bildet.

4. Haltevorrichtung nach einem der vorhergehenden Ansprüche, **dadurch gekennzeichnet, dass** der Träger (4) mit einer Bodenfläche (10) wenigstens eine Auflagefläche (15, 16) für das elektronische Gerät (2, 39) bildet.

5. Haltevorrichtung nach einem der vorhergehenden Ansprüche, **dadurch gekennzeichnet, dass** die Haltevorrichtung (1) wenigstens ein Rastelement (11) aufweist, durch welches das elektronische Gerät (2, 39) in der Haltestellung (B) des Trägers (4) an der Haltevorrichtung (1) festlegbar ist.

6. Haltevorrichtung nach einem der vorhergehenden Ansprüche, **dadurch gekennzeichnet, dass** der Träger (4) drei Seitenwände (27, 28, 29) aufweist.

7. Haltevorrichtung nach einem der vorhergehenden Ansprüche, **dadurch gekennzeichnet, dass** der Träger (4) als Fach (12) ausgebildet ist, in welches das elektronische Gerät (2, 39) einschiebbar ist.

8. Haltevorrichtung nach Anspruch 7, **dadurch gekennzeichnet, dass** das Fach (12) für eine Anzeigevorrichtung (24) des elektronischen Geräts (2, 39) einen Durchbruch oder ein Fenster aufweist.

9. Haltevorrichtung nach einem der vorhergehenden Ansprüche, **dadurch gekennzeichnet, dass** der Träger (4) aus einem transparenten Material ausgebildet ist.

10. Haltevorrichtung nach einem der vorhergehenden Ansprüche, **dadurch gekennzeichnet, dass** das elektronische Gerät (2, 39) in der Einschiebestellung bzw. Entnahmestellung (A) des Trägers (4) aus der Haltevorrichtung (1) entgegen einer Kontaktierungsrichtung (KR) entnehmbar ist.

11. Haltevorrichtung nach einem der vorhergehenden Ansprüche, **dadurch gekennzeichnet, dass** das elektronische Gerät (2) ein Mobiltelefon (39) ist.

12. Haltevorrichtung nach Anspruch 11, **dadurch gekennzeichnet, dass** Mobiltelefon (39) als Klapptelefon ausgebildet ist.

13. Haltevorrichtung nach Anspruch 11, **dadurch gekennzeichnet, dass** das Mobiltelefon (39) als Schiebetelefon ausgebildet ist.

14. Haltevorrichtung nach einem der vorhergehenden Ansprüche, **dadurch gekennzeichnet, dass** die Haltervorrichtung (1) in eine Konsole (K) eingebettet ist.

15. Haltevorrichtung nach einem der vorhergehenden Ansprüche, **dadurch gekennzeichnet, dass** die Haltervorrichtung (1) mit einer Kontaktplatte (46) kontaktierbar und verrastbar ist.

16. Haltevorrichtung nach einem der vorhergehenden Ansprüche, **dadurch gekennzeichnet, dass** an dem Gründkörper (3) der Haltervorrichtung (1) wenigstens ein elektrischer Schalter oder ein elektrischer Taster (47, 48) angeordnet ist.
